# EUROPÄISCHE PATENTSCHRIFT

(11) **EP 2 274 087 B1**
(45) Veröffentlichungstag und Bekanntmachung des Hinweises auf die Patenterteilung: **06.01.2016**
(21) Anmeldenummer: 09738002.6
(22) Anmeldetag: 14.04.2009
(51) Int. Cl.: B01F 7/08, C08F 220/06

(54) **VERFAHREN ZUR HERSTELLUNG WASSERABSORBIERENDER POLYMERPARTIKEL**
METHOD FOR PRODUCING WATER-ABSORBING POLYMER PARTICLES
PROCÉDÉ DE PRODUCTION DE PARTICULES POLYMÈRES HYDRO-ABSORBANTES

(30) Priorität: 30.04.2008 EP 08155507
(43) Veröffentlichungstag der Anmeldung: 19.01.2011
(73) Patentinhaber: BASF SE, 67056 Ludwigshafen (DE)
(72) Erfinder: WEISMANTEL, Matthias, 63637 Jossgrund (DE); FUNK, Rüdiger, 65527 Niedernhausen (DE); BECKER, Ann, B-2150 Borsbeek (BE); VAN MIERT, Leo, B-2950 Kapellen (BE)
(86) Internationale Anmeldenummer: PCT/EP2009/054369
(87) Internationale Veröffentlichungsnummer: WO 2009/132958

(56) Entgegenhaltungen:
- DE-A1-102005 001 802
- US-A- 5 622 323
- US-A1- 2005 051 925

## Beschreibung

Die vorliegende Erfindung betrifft ein Verfahren zur Herstellung wasserabsorbierender Polymerpartikel, wobei ein Polymergel einem Polymerisationsreaktor entnommen und als partikuläres Polymergel in einem Verweilzeitbehälter zwischengelagert wird.

Die Herstellung wasserabsorbierender Polymerpartikel wird in der Monographie "Modern Superabsorbent Polymer Technology", F.L. Buchholz und A.T. Graham, Wiley-VCH, 1998, Seiten 71 bis 103, beschrieben.

Das durch Lösungspolymerisation erhaltene Polymergel kann zur Erhöhung des Monomerumsatzes in einem isolierten Behälter zwischengelagert werden.

Wasserabsorbierende Polymere werden zur Herstellung von Windeln, Tampons, Damenbinden und anderen Hygieneartikeln, aber auch als wasserzurückhaltende Mittel im landwirtschaftlichen Gartenbau verwendet.

Aufgabe der vorliegenden Erfindung war die Bereitstellung eines verbesserten Verfahrens zur Herstellung wasserabsorbierender Polymerpartikel.

Gelöst wurde die Aufgabe durch ein Verfahren zur Herstellung wasserabsorbierender Polymerpartikel durch Polymerisation einer Monomerlösung oder -suspension, enthaltend
a) mindestens ein ethylenisch ungesättigtes, säuregruppentragendes Monomer, das zumindest teilweise neutralisiert sein kann,
b) mindestens einen Vernetzer,
c) mindestens einen Initiator,
d) optional ein oder mehrere mit den unter a) genannten Monomeren copolymerisierbare ethylenisch ungesättigte Monomere und
e) optional ein oder mehrere wasserlösliche Polymere,

in mindestens einem Polymerisationsreaktor, wobei das erhaltene Polymergel dem Polymerisationsreaktor entnommen, gegebenenfalls zerkleinert, als partikuläres Polymergel in mindestens einem Verweilzeitbehälter zwischengelagert, mittels mindestens einer ersten Fördervorrichtung am unteren Ende des Verweilzeitbehälters entnommen und getrocknet wird, dadurch gekennzeichnet, dass das zwischengelagerte partikuläre Polymergel im Verweilzeitbehälter mittels mindestens einer zweiten Fördervorrichtung oberhalb der ersten Fördervorrichtung in Richtung der ersten Fördervorrichtung gefördert wird.

Sofern das Polymergel nicht bereits im Polymerisationsreaktor als partikuläres Polymergel anfällt, muss das Polymergel zu einem partikulären Polymergel zerkleinert werden. Polymerisationsreaktoren in denen bereits ein partikuläres Polymergel anfällt sind beispielsweise Knetreaktoren. Polymerisationsreaktoren in denen kein partikuläres Polymergel anfällt sind beispielsweise Bandreaktoren.

Die Partikelgröße des partikulären Polymergels beträgt vorzugsweise 0,1 bis 100 mm, besonders bevorzugt 0,5 bis 10 mm, ganz besonders bevorzugt 1 bis 3 mm.

Das Polymergel wird dem Verweilzeitbehälter mittels mindestens einer ersten Fördervorrichtung, vorzugsweise mittels mindestens einem Schneckenförderer, besonders bevorzugt mittels mindestens eines Schneckenförderers mit zwei gegenläufig wirkenden Förderschnecken, entnommen und vorzugsweise mittels eines Schwenkbandes in die Trocknungsvorrichtung, beispielsweise einen Bandtrockner, überführt.

Wird als erste Fördervorrichtung ein Schneckenförderer eingesetzt, so beträgt die Drehzahl der Förderschnecke vorzugsweise von 1 bis 50 Umdrehungen/Minute, besonders bevorzugt von 5 bis 30 Umdrehungen/Minute, ganz besonders bevorzugt von 10 bis 20 Umdrehungen/Minute. Der Außendurchmesser der Förderschnecke beträgt vorzugsweise 0,05 bis 0,5 m, besonders bevorzugt von 0,1 bis 0,4 m, ganz besonders bevorzugt von 0,2 bis 0,3 m.

Das Polymergel wird im Verweilzeitbehälter mittels mindestens einer zweiten Fördervorrichtung, vorzugsweise mittels mindestens einem Schneckenförderer, besonders bevorzugt mittels mindestens eines Schneckenförderers mit zwei gegenläufig wirkenden Förderschnecken, ganz besonders bevorzugt mittels zweier Schneckenförderers mit je zwei gegenläufig wirkenden Förderschnecken, in Richtung der ersten Fördervorrichtung gefördert.

Wird als zweite Fördervorrichtung ein Schneckenförderer eingesetzt, so beträgt die Drehzahl der Förderschnecke vorzugsweise von 0,05 bis 5 Umdrehungen/Minute, besonders bevorzugt von 0,1 bis 2 Umdrehungen/Minute, ganz besonders bevorzugt von 0,2 bis 1 Umdrehungen/Minute. Der Außendurchmesser der Förderschnecke beträgt vorzugsweise 0,1 bis 1,5 m, besonders bevorzugt von 0,25 bis 1 m, ganz besonders bevorzugt von 0,5 bis 0,75 m.

Die Förderleistung der zweiten Fördervorrichtung sollte geringer sein als die Förderleistung der ersten Fördervorrichtung um eine unerwünschte Verdichtung des Polymergels zu vermeiden.

In einer bevorzugten Ausführungsform der vorliegenden Erfindung werden Schneckenförderer mit einer Kombination aus Rechts- und Linksgewinde als zweite Fördervorrichtung eingesetzt. Die Kombination von Rechts- und Linksgewinde auf einer Welle ermöglicht den Transport des partikulären Polymergels von den äußeren Bereichen zum Zentrum.

Die Förderrichtung bzw. die Drehachsen der Schneckenförderer der ersten Fördervorrichtung und der zweiten Fördervorrichtung sind üblicherweise horizontal versetzt angeordnet. Der eingeschlossene Winkel beträgt vorzugsweise 45 bis 90°, besonders bevorzugt 80 bis 90°, ganz besonders bevorzugt 85 bis 90°.

Die Figuren zeigen bevorzugte Ausführungsformen der Erfindung, wobei die Bezugszeichen die folgenden Bedeutungen haben:
1 erste Fördervorrichtung
2 zweite Fördervorrichtung
3 Verweilzeitbehälter
4 partikuläres Polymergel

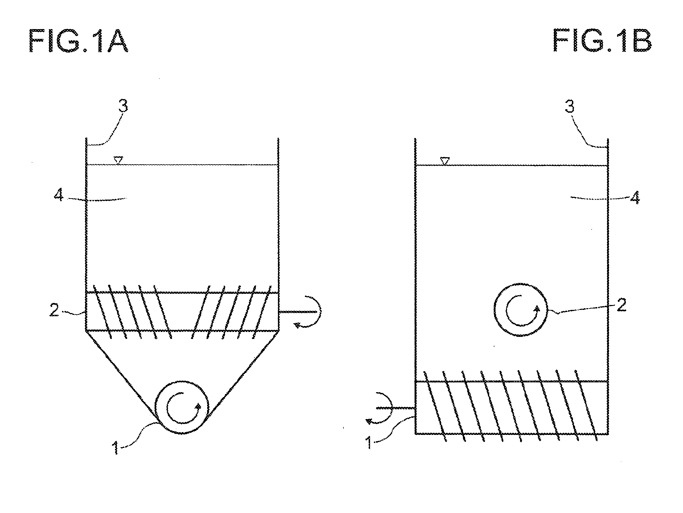

Die Figuren 1a und 1 b zeigen zwei um 90° gedrehte Vertikalschnitte durch einen Verweilzeitbehälter mit einem Schneckenförderer als erste Fördervorrichtung und einem Schneckenförderer als zweite Fördervorrichtung. Der Scheckenförderer der zweiten Fördervorrichtung weist ein Rechts- und Linksgewinde auf und fördert von der Behälterwand zur Behältermitte.

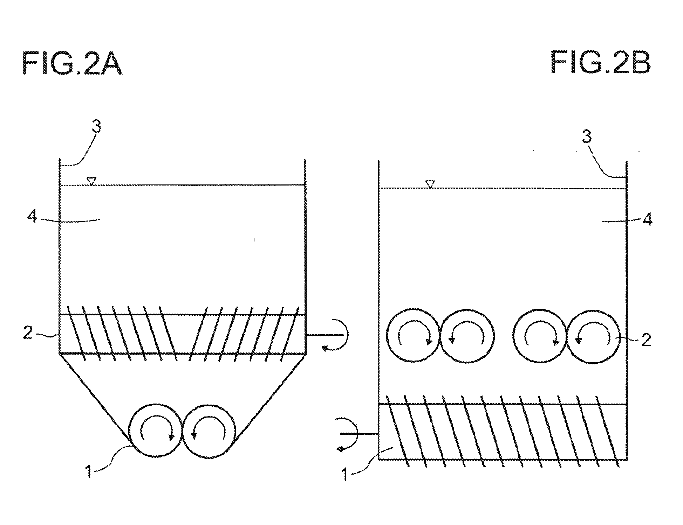

Die Figuren 2a und 2b zeigen zwei um 90° gedrehte Vertikalschnitte durch einen Verweilzeitbehälter mit einem Schneckenförderer mit zwei gegenläufig wirkenden Förderschnecken als erste Fördervorrichtung und zwei Schneckenförderern mit je zwei gegenläufig wirkenden Förderschnecken als zweite Fördervorrichtung. Die Scheckenförderer der zweiten Fördervorrichtung weisen ein Rechts- und Linksgewinde auf und fördern von der Behälterwand zur Behältermitte.

Die beiden Schneckenförderer gemäß den Figuren 2a und 2b werden vorteilhaft so angeordnet, dass die Förderschnecken der beiden benachbarten Förderschnecken gerade nicht ineinander greifen. Die jeweils beiden gegenläufigen Förderschnecken der Schneckenförderer greifen dagegen üblicherweise ineinander.

Weiterhin sollte die Größe der Förderschnecken so gewählt werden, dass die Förderschnecken der zweiten Fördervorrichtung den horizontalen Querschnitt des Verweilzeitbehälters möglichst vollständig ausfüllen, d.h. keine Bereiche vorkommen, in denen das partikuläre Polymergel nicht gefördert wird.

Im erfindungsgemäßen Verfahren können Verweilzeitbehälter mit einem größeren Querschnitt als bisher üblich verwendet werden. Trotz des vergrößerten Querschnitts besteht keine Tendenz zur Brückenbildung im Behälter. Dadurch können Verweilzeitbehälter mit einer niedrigeren Schütthöhe realisiert werden. Infolge der niedrigeren Schütthöhe werden die partikulären Polymergele im Verweilzeitbehälter weniger stark verdichtet und lassen sich leichter trocknen.

Der vertikale Abstand zwischen der ersten Fördervorrichtung und der zweiten Fördervorrichtung beträgt vorzugsweise weniger als 0,5 m, besonders bevorzugt weniger als 0,2 m, ganz besonders bevorzugt weniger als 0,1 m.

Die Verweilzeit des partikulären Polymergels im Verweilzeitbehälter beträgt vorzugsweise von 1 bis 60 Minuten, besonders bevorzugt von 2 bis 30 Minuten, ganz besonders bevorzugt von 5 bis 15 Minuten.

Die Temperatur des partikulären Polymergels im Verweilzeitbehälter beträgt vorzugsweise von 60 bis 100°C, besonders bevorzugt von 70 bis 95°C, ganz besonders bevorzugt von 80 bis 90°C. Üblicherweise wird der Verweilzeitbehälter thermisch isoliert.

Die Schütthöhe des partikulären Polymergels im Verweilzeitbehälter beträgt vorzugsweise von 0,5 bis 3 m, besonders bevorzugt von 0,8 bis 2,5 m, ganz besonders bevorzugt von 1 bis 2 m.

Die Gasatmosphäre im Verweilzeitbehälter weist einen Sauerstoffpartialdruck von vorzugsweise weniger als 50 mbar, besonders bevorzugt von weniger als 10 mbar, ganz besonders bevorzugt von weniger als 2 mbar. Sauerstoff fängt im partikulären Polymergel enthaltende bzw. durch Restinitiatorzerfall entstehende Radikale ab. Diese Radikale sind aber zum Umsatz der Restmonomeren notwendig.

Das partikuläre Polymergel im Verweilzeitbehälter weist einen Wassergehalt von vorzugsweise 30 bis 70 Gew.-%, besonders bevorzugt von 35 bis 65 Gew.-%, ganz besonders bevorzugt von 40 bis 60 Gew.-%, auf. Niedrigere und höhere Wassergehalte führen zu einem verminderten Umsatz an Restmonomeren im Verweilzeitbehälter.

Die wasserabsorbierenden Polymerpartikel werden durch Polymerisation einer Monomerlösung oder -suspension hergestellt und sind üblicherweise wasserunlöslich.

Die Monomeren a) sind vorzugsweise wasserlöslich, d.h. die Löslichkeit in Wasser bei 23°C beträgt typischerweise mindestens 1 g/100 g Wasser, vorzugsweise mindestens 5 g/100 g Wasser, besonders bevorzugt mindestens 25 g/100 g Wasser, ganz besonders bevorzugt mindestens 35 g/100 g Wasser.

Geeignete Monomere a) sind beispielsweise ethylenisch ungesättigte Carbonsäuren, wie Acrylsäure, Methacrylsäure, und Itaconsäure. Besonders bevorzugte Monomere sind Acrylsäure und Methacrylsäure. Ganz besonders bevorzugt ist Acrylsäure.

Weitere geeignete Monomere a) sind beispielsweise ethylenisch ungesättigte Sulfonsäuren, wie Styrolsulfonsäure und 2-Acrylamido-2-methylpropansulfonsäure (AMPS).

Verunreinigungen können einen erheblichen Einfluss auf die Polymerisation haben. Daher sollten die eingesetzten Rohstoffe eine möglichst hohe Reinheit aufweisen. Es ist daher oft vorteilhaft die Monomeren a) speziell zu reinigen. Geeignete Reinigungsverfahren werden beispielsweise in der WO 2002/055469 A1, der WO 2003/078378 A1 und der WO 2004/035514 A1 beschrieben. Ein geeignetes Monomer a) ist beispielsweise eine gemäß WO 2004/035514 A1 gereinigte Acrylsäure mit 99,8460 Gew.-% Acrylsäure, 0,0950 Gew.-% Essigsäure, 0,0332 Gew.-% Wasser, 0,0203 Gew.-% Propionsäure, 0,0001 Gew.-% Furfurale, 0,0001 Gew.-% Maleinsäureanhydrid, 0,0003 Gew.-% Diacrylsäure und 0,0050 Gew.-% Hydrochinonmonomethylether.

Der Anteil an Acrylsäure und/oder deren Salzen an der Gesamtmenge der Monomeren a) beträgt vorzugsweise mindestens 50 mol-%, besonders bevorzugt mindestens 90 mol-%, ganz besonders bevorzugt mindestens 95 mol-%.

Die Monomere a) enthalten üblicherweise Polymerisationsinhibitoren, vorzugsweise Hydrochinonhalbether, als Lagerstabilisator.

Die Monomerlösung enthält vorzugsweise bis zu 250 Gew.-ppm, bevorzugt höchstens 130 Gew.-ppm, besonders bevorzugt höchstens 70 Gew.-ppm, bevorzugt mindesten 10 Gew.-ppm, besonders bevorzugt mindesten 30 Gew.-ppm, insbesondere um 50 Gew.-ppm, Hydrochinonhalbether, jeweils bezogen auf das unneutralisierte Monomer a). Beispielsweise kann zur Herstellung der Monomerlösung ein ethylenisch ungesättigtes, säuregruppentragendes Monomer mit einem entsprechenden Gehalt an Hydrochinonhalbether verwendet werden.

Bevorzugte Hydrochinonhalbether sind Hydrochinonmonomethylether (MEHQ) und/oder alpha-Tocopherol (Vitamin E).

Geeignete Vernetzer b) sind Verbindungen mit mindestens zwei zur Vernetzung geeigneten Gruppen. Derartige Gruppen sind beispielsweise ethylenisch ungesättigte Gruppen, die in die Polymerkette radikalisch einpolymerisiert werden können, und funktionelle Gruppen, die mit den Säuregruppen des Monomeren a) kovalente Bindungen ausbilden können. Weiterhin sind auch polyvalente Metallsalze, die mit mindestens zwei Säuregruppen des Monomeren a) koordinative Bindungen ausbilden können, als Vernetzer b) geeignet.

Vernetzer b) sind vorzugsweise Verbindungen mit mindestens zwei polymerisierbaren Gruppen, die in das Polymernetzwerk radikalisch einpolymerisiert werden können. Geeignete Vernetzer b) sind beispielsweise Ethylenglykoldimethacrylat, Diethylenglykoldiacrylat, Polyethylenglykoldiacrylat, Allylmethacrylat, Trimethylolpropantriacrylat, Triallylamin, Tetraallylammoniumchlorid, Tetraallyloxyethan, wie in EP 0 530 438 A1 beschrieben, Di- und Triacrylate, wie in EP 0 547 847 A1, EP 0 559 476 A1, EP 0 632 068 A1, WO 93/21237 A1, WO 2003/104299 A1, WO 2003/104300 A1, WO 2003/104301 A1 und DE 103 31 450 A1 beschrieben, gemischte Acrylate, die neben Acrylatgruppen weitere ethylenisch ungesättigte Gruppen enthalten, wie in DE 103 31 456 A1 und DE 103 55 401 A1 beschrieben, oder Vernetzermischungen, wie beispielsweise in DE 195 43 368 A1, DE 196 46 484 A1, WO 90/15830 A1 und WO 2002/032962 A2 beschrieben.

Bevorzugte Vernetzer b) sind Pentaerythrittriallylether, Tetraalloxyethan, Methylenbismethacrylamid, 15-fach ethoxiliertes Trimethylolpropantriacrylat, Polyethylenglykoldiacrylat, Trimethylolpropantriacrylat und Triallylamin.

Ganz besonders bevorzugte Vernetzer b) sind die mit Acrylsäure oder Methacrylsäure zu Di- oder Triacrylaten veresterten mehrfach ethoxylierten und/oder propoxylierten Glyzerine, wie sie beispielsweise in WO 2003/104301 A1 beschrieben sind. Besonders vorteilhaft sind Di- und/oder Triacrylate des 3- bis 10-fach ethoxylierten Glyzerins. Ganz besonders bevorzugt sind Di- oder Triacrylate des 1- bis 5-fach ethoxylierten und/oder propoxylierten Glyzerins. Am meisten bevorzugt sind die Triacrylate des 3- bis 5-fach ethoxylierten und/oder propoxylierten Glyzerins, insbesondere das Triacrylat des 3-fach ethoxylierten Glyzerins.

Die Menge an Vernetzer b) beträgt vorzugsweise 0,05 bis 1,5 Gew.-%, besonders bevorzugt 0,1 bis 1 Gew.-%, ganz besonders bevorzugt 0,3 bis 0,6 Gew.-%, jeweils bezogen auf Monomer a). Mit steigendem Vernetzergehalt sinkt die Zentrifugenretentionskapazität (CRC) und die Absorption unter einem Druck von 21,0 g/cm² (AUL0.3psi) durchläuft ein Maximum.

Als Initiatoren c) können sämtliche unter den Polymerisationsbedingungen in Radikale erzeugende Verbindungen eingesetzt werden, beispielsweise thermische Initiatoren, Redox-Initiatoren, Photoinitiatoren. Geeignete Redox-Initiatoren sind Natriumperoxodisulfat/Ascorbinsäure, Wasserstoffperoxid/Ascorbinsäure, Natriumperoxodisulfat/Natriumbisulfit und Wasserstoffperoxid/Natriumbisulfit. Vorzugsweise werden Mischungen aus thermischen Initiatoren und Redox-Initiatoren eingesetzt, wie Natriumperoxodisulfat/Wasserstoffperoxid/Ascorbinsäure. Als reduzierende Komponente wird aber vorzugsweise ein Gemisch aus dem Natriumsalz der 2-Hydroxy-2-sulfinatoessigsäure, dem Dinatriumsalz der 2-Hydroxy-2-sulfonatoessigsäure und Natriumbisulfit eingesetzt. Derartige Gemische sind als Brüggolite® FF6 und Brüggolite® FF7 (Brüggemann Chemicals; Heilbronn; DE) erhältlich.

Mit den ethylenisch ungesättigten, säuregruppentragenden Monomeren a) copolymerisierbare ethylenisch ungesättigte Monomere d) sind beispielsweise Acrylamid, Methacrylamid, Hydroxyethylacrylat, Hydroxyethylmethacrylat, Dimethylaminoethylmethacrylat, Dimethylaminoethylacrylat, Dimethylaminopropylacrylat, Diethylaminopropylacrylat, Dimethylaminoethylmethacrylat, Diethylaminoethylmethacrylat.

Als wasserlösliche Polymere e) können Polyvinylalkohol, Polyvinylpyrrolidon, Stärke, Stärkederivate, modifizierte Cellulose, wie Methylcellulose oder Hydroxyethylcellulose, Gelatine, Polyglykole oder Polyacrylsäuren, vorzugsweise Stärke, Stärkederivate und modifizierte Cellulose, eingesetzt werden.

Üblicherweise wird eine wässrige Monomerlösung verwendet. Der Wassergehalt der Monomerlösung beträgt vorzugsweise von 40 bis 75 Gew.-%, besonders bevorzugt von 45 bis 70 Gew.-%, ganz besonders bevorzugt von 50 bis 65 Gew.-%. Es ist auch möglich Monomersuspensionen, d.h. übersättigte Monomerlösungen einzusetzen. Mit steigendem Wassergehalt steigt der Energieaufwand bei der anschließenden Trocknung und mit sinkendem Wassergehalt kann die Polymerisationswärme nur noch ungenügend abgeführt werden.

Die bevorzugten Polymerisationsinhibitoren benötigen für eine optimale Wirkung gelösten Sauerstoff. Daher kann die Monomerlösung vor der Polymerisation durch Inertisierung, d.h. Durchströmen mit einem inerten Gas, vorzugsweise Stickstoff oder Kohlendioxid, von gelöstem Sauerstoff befreit werden. Vorzugsweise wird der Sauerstoffgehalt der Monomerlösung vor der Polymerisation auf weniger als 1 Gew.-ppm, besonders bevorzugt auf weniger als 0,5 Gew.-ppm, ganz besonders bevorzugt auf weniger als 0,1 Gew.-ppm, gesenkt.

Geeignete Reaktoren sind beispielsweise Knetreaktoren oder Bandreaktoren. Im Kneter wird das bei der Polymerisation einer wässrigen Monomerlösung oder -suspension entstehende Polymergel durch beispielsweise gegenläufige Rührwellen kontinuierlich zerkleinert, wie in WO 2001/038402 A1 beschrieben. Die Polymerisation auf dem Band wird beispielsweise in DE 38 25 366 A1 und US 6,241,928 beschrieben. Bei der Polymerisation in einem Bandreaktor entsteht ein Polymergel, das in einem weiteren Verfahrensschritt zerkleinert werden muss, beispielsweise in einem Extruder oder Kneter.

Die Säuregruppen der erhaltenen Polymergele sind üblicherweise teilweise neutralisiert. Die Neutralisation wird vorzugsweise auf der Stufe der Monomeren durchgeführt.

Dies geschieht üblicherweise durch Einmischung des Neutralisationsmittels als wässrige Lösung oder bevorzugt auch als Feststoff. Der Neutralisationsgrad beträgt vorzugsweise von 25 bis 95 mol-%, besonders bevorzugt von 30 bis 80 mol-%, ganz besonders bevorzugt von 40 bis 75 mol-%, wobei die üblichen Neutralisationsmittel verwendet werden können, vorzugsweise Alkalimetallhydroxide, Alkalimetalloxide, Alkalimetallkarbonate oder Alkalimetallhydrogenkarbonate sowie deren Mischungen. Statt Alkalimetallsalzen können auch Ammoniumsalze verwendet werden. Natrium und Kalium sind als Alkalimetalle besonders bevorzugt, ganz besonders bevorzugt sind jedoch Natriumhydroxid, Natriumkarbonat oder Natriumhydrogenkarbonat sowie deren Mischungen.

Es ist aber auch möglich die Neutralisation nach der Polymerisation auf der Stufe des bei der Polymerisation entstehenden Polymergels durchzuführen. Weiterhin ist es möglich bis zu 40 mol-%, vorzugsweise 10 bis 30 mol-%, besonders bevorzugt 15 bis 25 mol-%, der Säuregruppen vor der Polymerisation zu neutralisieren indem ein Teil des Neutralisationsmittels bereits der Monomerlösung zugesetzt und der gewünschte Endneutralisationsgrad erst nach der Polymerisation auf der Stufe des Polymergels eingestellt wird. Wird das Polymergel zumindest teilweise nach der Polymerisation neutralisiert, so wird das Polymergel vorzugsweise mechanisch zerkleinert, beispielsweise mittels eines Extruders, wobei das Neutralisationsmittel aufgesprüht, übergestreut oder aufgegossen und dann sorgfältig untergemischt werden kann. Dazu kann die erhaltene Gelmasse noch mehrmals zur Homogenisierung extrudiert werden.

Das Polymergel wird dann vorzugsweise mit einem Bandtrockner getrocknet bis der Restfeuchtegehalt vorzugsweise 0,5 bis 15 Gew.-%, besonders bevorzugt 1 bis 10 Gew.-%, ganz besonders bevorzugt 2 bis 8 Gew.-%, beträgt, wobei der Restfeuchtegehalt gemäß der von der EDANA (European Disposables and Nonwovens Association) empfohlenen Testmethode Nr. WSP 230.2-05 "Moisture content" bestimmt wird. Bei einer zu hohen Restfeuchte weist das getrocknete Polymergel eine zu niedrige Glasübergangstemperatur T_{g} auf und ist nur schwierig weiter zu verarbeiten. Bei einer zu niedrigen Restfeuchte ist das getrocknete Polymergel zu spröde und in den anschließenden Zerkleinerungsschritten fallen unerwünscht große Mengen an Polymerpartikeln mit zu niedriger Partikelgröße ("fines") an. Der Feststoffgehalt des Gels beträgt vor der Trocknung vorzugsweise von 25 und 90 Gew.-%, besonders bevorzugt von 35 bis 70 Gew.-%, ganz besonders bevorzugt von 40 bis 60 Gew.-%. Wahlweise kann zur Trocknung aber auch ein Wirbelbetttrockner oder ein beheizter Pflugscharmischer verwendet werden.

Das gemäß dem erfindungsgemäßen Verfahren zusätzlich im Gelbunker aufgelockerte Polymergel lässt sich um Vergleich zu nicht zusätzlich vorbehandelten Polymergel besser trocknen. Das erfindungsgemäße Verfahren wird vorteilhaft kontinuierlich durchgeführt.

Das getrocknete Polymergel wird hiernach gemahlen und klassiert, wobei zur Mahlung üblicherweise ein- oder mehrstufige Walzenstühle, bevorzugt zwei- oder dreistufige Walzenstühle, Stiftmühlen, Hammermühlen oder Schwingmühlen eingesetzt werden können.

Die mittlere Partikelgröße der als Produktfraktion abgetrennten Polymerpartikel beträgt vorzugsweise mindestens 200 µm, besonders bevorzugt von 250 bis 600 µm, ganz besonders von 300 bis 500 µm. Die mittlere Partikelgröße der Produktfraktion kann mittels der von der EDANA (European Disposables and Nonwovens Association) empfohlenen Testmethode Nr. WSP 220.2-05 "Partikel size distribution" ermittelt werden, wobei die Massenanteile der Siebfraktionen kumuliert aufgetragen werden und die mittlere Partikelgröße graphisch bestimmt wird. Die mittlere Partikelgröße ist hierbei der Wert der Maschenweite, der sich für kumulierte 50 Gew.-% ergibt.

Der Anteil an Partikeln mit einer Partikelgröße von mindestens 150 µm beträgt vorzugsweise mindestens 90 Gew.-%, besonders bevorzugt mindesten 95 Gew.-%, ganz besonders bevorzugt mindestens 98 Gew.-%.

Polymerpartikel mit zu niedriger Partikelgröße senken die Permeabilität (SFC). Daher sollte der Anteil zu kleiner Polymerpartikel ("fines") niedrig sein.

Der Anteil an Partikeln mit einer Partikelgröße von höchstens 850 µm, beträgt vorzugsweise mindestens 90 Gew.-%, besonders bevorzugt mindesten 95 Gew.-%, ganz besonders bevorzugt mindestens 98 Gew.-%.

Polymerpartikel mit zu großer Partikelgröße senken die Anquellgeschwindigkeit. Daher sollte der Anteil zu großer Polymerpartikel ebenfalls niedrig sein.

Die Polymerpartikel können zur weiteren Verbesserung der Eigenschaften nachvernetzt werden. Geeignete Nachvernetzer sind Verbindungen, die Gruppen enthalten, die mit mindestens zwei Carboxylatgruppen der Polymerpartikel kovalente Bindungen bilden können. Geeignete Verbindungen sind beispielsweise polyfunktionelle Amine, polyfunktionelle Amidoamine, polyfunktionelle Epoxide, wie in EP 0 083 022 A2, EP 0 543 303 A1 und EP 0 937 736 A2 beschrieben, di- oder polyfunktionelle Alkohole, wie in DE 33 14 019 A1, DE 35 23 617 A1 und EP 0 450 922 A2 beschrieben, oder ß-Hydroxyalkylamide, wie in DE 102 04 938 A1 und US 6,239,230 beschrieben.

Des weiteren sind in DE 40 20 780 C1 zyklische Karbonate, in DE 198 07 502 A1 2-Oxazolidon und dessen Derivate, wie 2-Hydroxyethyl-2-oxazolidon, in DE 198 07 992 C1 Bis- und Poly-2-oxazolidinone, in DE 198 54 573 A1 2-Oxotetrahydro-1,3-oxazin und dessen Derivate, in DE 198 54 574 A1 N-Acyl-2-Oxazolidone, in DE 102 04 937 A1 zyklische Harnstoffe, in DE 103 34 584 A1 bizyklische Amidacetale, in EP 1 199 327 A2 Oxetane und zyklische Harnstoffe und in WO 2003/031482 A1 Morpholin-2,3-dion und dessen Derivate als geeignete Nachvernetzer beschrieben.

Bevorzuge Nachvernetzer sind Ethylenkarbonat, Ethylenglykoldiglycidylether, Umsetzungsprodukte von Polyamiden mit Epichlorhydrin und Gemische aus Propylenglykol und 1,4-Butandiol.

Ganz besonders bevorzugte Nachvernetzer sind 2-Hydroxyethyloxazolidin-2-on, Oxazolidin-2-on und 1,3-Propandiol.

Weiterhin können auch Nachvernetzer eingesetzt werden, die zusätzliche polymerisierbare ethylenisch ungesättigte Gruppen enthalten, wie in DE 37 13 601 A1 beschrieben

Die Menge an Nachvernetzer beträgt vorzugsweise 0,001 bis 2 Gew.-%, besonders bevorzugt 0,02 bis 1 Gew.-%, ganz besonders bevorzugt 0,05 bis 0,2 Gew.-%, jeweils bezogen auf die Polymerpartikel.

In einer bevorzugten Ausführungsform der vorliegenden Erfindung werden vor, während oder nach der Nachvernetzung zusätzlich zu den Nachvernetzern polyvalente Kationen auf die Partikeloberfläche aufgebracht.

Die im erfindungsgemäßen Verfahren einsetzbaren polyvalenten Kationen sind beispielsweise zweiwertige Kationen, wie die Kationen von Zink, Magnesium, Kalzium, Eisen und Strontium, dreiwertige Kationen, wie die Kationen von Aluminium, Eisen, Chrom, Seltenerden und Mangan, vierwertige Kationen, wie die Kationen von Titan und Zirkonium. Als Gegenion sind Chlorid, Bromid, Sulfat, Hydrogensulfat, Carbonat, Hydrogencarbonat, Nitrat, Phosphat, Hydrogenphosphat, Dihydrogenphosphat und Carboxylat, wie Acetat und Lactat, möglich. Aluminiumsulfat und Aluminiumlaktat sind bevorzugt. Außer Metallsalzen können auch Polyamine als polyvalente Kationen eingesetzt werden.

Die Einsatzmenge an polyvalentem Kation beträgt beispielsweise 0,001 bis 1,5 Gew.-%, vorzugsweise 0,005 bis 1 Gew.-%, besonders bevorzugt 0,02 bis 0,8 Gew.-%. jeweils bezogen auf die Polymerpartikel.

Die Nachvernetzung wird üblicherweise so durchgeführt, dass eine Lösung des Nachvernetzers auf die getrockneten Polymerpartikel aufgesprüht wird. Im Anschluss an das Aufsprühen werden die mit Nachvernetzer beschichteten Polymerpartikel thermisch getrocknet, wobei die Nachvernetzungsreaktion sowohl vor als auch während der Trocknung stattfinden kann.

Das Aufsprühen einer Lösung des Nachvernetzers wird vorzugsweise in Mischern mit bewegten Mischwerkzeugen, wie Schneckenmischer, Scheibenmischer, Pflugscharmischer und Schaufelmischer, durchgeführt werden. Besonders bevorzugt sind Horizontalmischer, wie Pflugscharmischer und Schaufelmischer, ganz besonders bevorzugt sind Vertikalmischer. Geeignete Mischer sind beispielsweise Lödige-Mischer, Bepex-Mischer, Nauta-Mischer, Processall-Mischer und Schugi-Mischer. Es ist aber auch möglich die Nachvernetzerlösung in einem Wirbelbett aufzusprühen.

Die Nachvernetzer werden typischerweise als wäßrige Lösung eingesetzt. Über den Gehalt an nichtwäßrigem Lösungsmittel bzw. Gesamtlösungsmittelmenge kann die Eindringtiefe des Nachvernetzers in die Polymerpartikel eingestellt werden.

Wird ausschließlich Wasser als Lösungsmittel verwendet, so wird vorteilhaft ein Tensid zugesetzt. Dadurch wird das Benetzungsverhalten verbessert und die Verklumpungsneigung vermindert. Vorzugsweise werden aber Lösungsmittelgemische eingesetzt, beispielsweise Isopropanol/Wasser, 1,3-Propandiol/Wasser und Propylenglykol/Wasser, wobei das Mischungsmassenverhältnis vorzugsweise von 20:80 bis 40:60 beträgt.

Die thermische Trocknung wird vorzugsweise in Kontakttrocknern, besonders bevorzugt Schaufeltrocknern, ganz besonders bevorzugt Scheibentrocknern, durchgeführt. Geeignete Trockner sind beispielsweise Bepex-Trockner und Nara-Trockner. Überdies können auch Wirbelschichttrockner eingesetzt werden.

Die Trocknung kann im Mischer selbst erfolgen, durch Beheizung des Mantels oder Einblasen von Warmluft. Ebenso geeignet ist ein nachgeschalteter Trockner, wie beispielsweise ein Hordentrockner, ein Drehrohrofen oder eine beheizbare Schnecke. Besonders vorteilhaft wird in einem Wirbelschichttrockner gemischt und getrocknet.

Bevorzugte Trocknungstemperaturen liegen im Bereich 100 bis 250°C, bevorzugt 120 bis 220°C, besonders bevorzugt 130 bis 210°C, ganz besonders bevorzugt 150 bis 200°C. Die bevorzugte Verweilzeit bei dieser Temperatur im Reaktionsmischer oder Trockner beträgt vorzugsweise mindestens 10 Minuten, besonders bevorzugt mindestens 20 Minuten, ganz besonders bevorzugt mindestens 30 Minuten, und üblicherweise höchstens 60 Minuten.

Anschließend kann das nachvernetzte Polymer erneut klassiert werden.

Die nachvernetzten Polymerpartikel können zur weiteren Verbesserung der Eigenschaften beschichtet oder nachbefeuchtet werden. Geeignete Beschichtungen zur Verbesserung der Anquellgeschwindigkeit sowie der Permeabilität (SFC) sind beispielsweise anorganische inerte Substanzen, wie wasserunlösliche Metallsalze, organische Polymere, kationische Polymere sowie zwei- oder mehrwertige Metallkationen. Geeignete Beschichtungen zur Staubbindung sind beispielsweise Polyole. Geeignete Beschichtungen gegen die unerwünschte Verbackungsneigung der Polymerpartikel sind beispielsweise pyrogene Kieselsäure, wie Aerosil® 200, und Tenside, wie Span® 20.

Die gemäß dem erfindungsgemäßen Verfahren hergestellten wasserabsorbierenden Polymerpartikel weisen einen Feuchtegehalt von vorzugsweise 0 bis 15 Gew.-%, besonders bevorzugt 0,2 bis 10 Gew.-%, ganz besonders bevorzugt 0,5 bis 8 Gew.-%, auf, wobei der Wassergehalt gemäß der von der EDANA (European Disposables and Nonwovens Association) empfohlenen Testmethode Nr. WSP 230.2-05 "Moisture Content" bestimmt wird.

Die gemäß dem erfindungsgemäßen Verfahren hergestellten wasserabsorbierenden Polymerpartikel weisen eine Zentrifugenretentionskapazität (CRC) von typischerweise mindestens 15 g/g, vorzugsweise mindestens 20 g/g, bevorzugt mindestens 22 g/g, besonders bevorzugt mindestens 24 g/g, ganz besonders bevorzugt mindestens 26 g/g, auf. Die Zentrifugenretentionskapazität (CRC) der wasserabsorbierenden Polymerpartikel beträgt üblicherweise weniger als 60 g/g. Die Zentrifugenretentionskapazität (CRC) wird gemäß der von der EDANA (European Disposables and Nonwovens Association) empfohlenen Testmethode Nr. WSP 241.2-05 "Centrifuge Retention Capacity" bestimmt.

Die gemäß dem erfindungsgemäßen Verfahren hergestellten wasserabsorbierenden Polymerpartikel weisen eine Absorption unter einem Druck von 49,0 g/cm² (0.7psi) von typischerweise mindestens 15 g/g, vorzugsweise mindestens 20 g/g, bevorzugt mindestens 22 g/g, besonders bevorzugt mindestens 24 g/g, ganz besonders bevorzugt mindestens 26 g/g, auf. Die Absorption unter einem Druck von 49,0 g/cm² (AUL0.7psi) der wasserabsorbierenden Polymerpartikel beträgt üblicherweise weniger als 35 g/g. Die Absorption unter einem Druck von 49,0 g/cm² (AUL0.7psi) wird analog der von der EDANA (European Disposables and Nonwovens Association) empfohlenen Testmethode Nr. WSP 242.2-05 "Absorption under pressure" bestimmt, wobei statt eines Drucks von 21,0 g/cm² (0.3psi) ein Druck von 49,0 g/cm² (0.7psi) eingestellt wird.

Ein weiterer Gegenstand der vorliegenden Erfindung ist ein Behälter zur Durchführung des erfindungsgemäßen Verfahrens.

Ein weiterer Gegenstand der vorliegenden Erfindung ist eine Vorrichtung zur Herstellung wasserabsorbierender Polymerpartikel, umfassend mindestens einen Polymerisationsreaktor, mindestens einen erfindungsgemäßen Behälter und mindestens eine Trocknungsvorrichtung.

### Methoden:

Die Messungen sollten, wenn nicht anders angegeben, bei einer Umgebungstemperatur von 23 ± 2 °C und einer relativen Luftfeuchte von 50 ± 10 % durchgeführt werden. Die wasserabsorbierenden Polymere werden vor der Messung gut durchmischt.

### Restmonomere

Der Gehalt an Restmonomeren der wasserabsorbierenden Polymerpartikel wird gemäß der von der EDANA (European Disposables and Nonwovens Association) empfohlenen Testmethode Nr. 410.2-02 "Residual Monomers" bestimmt.

Der Gehalt an Restmonomeren der Polymergele wird analog bestimmt. Abweichend von der obigen Testmethode wird dazu 1 g Polymergel in 200 ml 10 gew.-%iger Kochsalzlösung insgesamt 6 Stunden mit 300 Umdrehungen/Minute mittels eines Magnetrührers gerührt. Als Rührstäbchen wird ein scheibenförmiges Magnetrührstäbchen mit einem Durchmesser von 30 mm und einer Höhe von 12 mm verwendet.

Die EDANA-Testmethoden sind beispielsweise erhältlich bei der European Disposables and Nonwovens Association, Avenue Eugène Plasky 157, B-1030 Brüssel, Belgien.

### Beispiel 1 (Vergleich)

Durch kontinuierliches Mischen von Wasser, 50 gew.-%iger Natronlauge und Acrylsäure wurde eine 38,8 gew.-%ige Acrylsäure/Natriumacrylatlösung hergestellt, so dass der Neutralisationsgrad 71,3 mol-% betrug. Der Feststoffgehalt der Monomerlösung betrug 38,8 Gew.-%. Die Monomerlösung wurde nach dem Mischen der Komponenten durch einen Wärmetauscher kontinuierlich abgekühlt.

Als mehrfach ethylenisch ungesättigter Vernetzer wird Polyethylenglykol-400-diacrylat (Diacrylat eines Polyethylenglykols mit einem mittleren Molgewicht von 400 g/mol) verwendet. Die Einsatzmenge betrug 2 kg pro t Monomerlösung.

Zur Initiierung der radikalischen Polymerisation wurden folgende Komponenten eingesetzt: Wasserstoffperoxid (1,03 kg (0,25 gew.-%ig) pro t Monomerlösung), Natriumperoxodisulfat (3,10 kg (15 gew.-%ig) pro t Monomerlösung), sowie Ascorbinsäure (1,05 kg (1 gew.-%ig) pro t Monomerlösung).

Der Durchsatz der Monomerlösung betrug 17 t/h.

Die einzelnen Komponenten werden kontinuierlich in einen List Contikneter mit 6.3m³ Volumen (Fa. List, Arisdorf, Schweiz) in folgenden Mengen eindosiert:

| | |
|---|---|
| 17 t/h | Monomerlösung |
| 34 kg/h | Polyethylenglycol-400-diacrylat |
| 70,2 kg/h | Wasserstoffperoxidlösung/Natriumperoxodisulfat-Lösung |
| 17,9 kg/h | Ascorbinsäurelösung |

Zwischen den Zugabepunkten für Vernetzer und Initiatoren wurde die Monomerlösung mit Stickstoff inertisiert.

Am Ende des Reaktors wurden zusätzlich 1.000 kg/h abgetrenntes Unterkorn mit einer Partikelgröße kleiner 150 µm zudosiert.

Die Reaktionslösung hatte am Zulauf eine Temperatur von 23,5°C. Der Reaktor wurde mit einer Drehzahl der Wellen von 38rpm betrieben. Die Verweilzeit der Reaktionsmischung im Reaktor betrug 15 Minuten.

Nach Polymerisation und Gelzerkleinerung wurde das wässrige Polymergel über einen Verweilzeitbehälter auf einen Umluftbandtrockner aufgegeben.

Der Verweilzeitbehälter hatte eine quadratische Grundfläche mit einer Kantenlänge von 2,2 m und eine Höhe von 2,3 m.

Der Verweilzeitbehälter hatte einen Schneckenförderer mit zwei gegenläufig wirkenden Förderschnecken als erste Fördervorrichtung und zwei Schneckenförderer mit je zwei gegenläufig wirkenden Förderschnecken als zweite Fördervorrichtung. Die Schneckenförderer der zweiten Fördervorrichtung wiesen ein Rechts- und Linksgewinde auf und förderten von der Behälterwand zur Behältermitte (Figuren 2a und 2b).

Die Förderschnecken der ersten Fördervorrichtung wurden mit 14 Umdrehungen/Minute und die Förderschnecken der zweiten Fördervorrichtung wurden mit 0,5 Umdrehungen/Minute betrieben.

Die Förderschnecken der erten Fördervorrichtung wiesen einen Außendurchmesser von 250 mm auf. Der Abstand der Wellen der gegenläufigen Förderschnecken betrug 180 mm.

Die Förderschnecken der zweiten Fördervorrichtung wiesen einen Außendurchmesser von 630 mm auf. Der Abstand der Wellen der gegenläufigen Förderschnecken betrug 465 mm.

Der Verweilzeitbehälter wurde so betrieben, dass sich kein Füllstand aufbauen konnte. Die zweite Fördervorrichtung war ausgeschaltet.

Das getrocknete Hydrogel wies einen Restfeuchtegehalt von ca. 3 Gew.-% auf und wurde grob zerkleinert.

Der Gehalt an Restmonomeren (Remos) wurde vor und nach der Trocknung bestimmt, ebenso der Anteil an Polymerpartikeln mit einer Partikelgröße von größer 10 mm nach der Grobzerkleinerung (Agglomerate). Die Ergebnisse sind in der Tabelle zusammengefasst.

### Beispiel 2 (Vergleich)

Es wurde verfahren wie unter Beispiel 1. Der Füllstand im Verweilzeitbehälter betrug zwischen 60 und 80%. Die zweite Fördervorrichtung blieb ausgeschaltet.

### Beispiel 3

Es wurde verfahren wie unter Beispiel 1. Der Füllstand im Verweilzeitbehälter betrug zwischen 60 und 80%. Die zweite Fördervorrichtung war eingeschaltet.

**Tabelle: Ergebnisse**

| Bsp. | Füllstand | zweite Fördervorrichtung | Remos vor Trocknung | Agglomerate | Remos nach Trocknung |
|---|---|---|---|---|---|
| 1* | ohne | ausgeschaltet | 0,8 Gew.-% | <0,5 t/h | 600 ppm |
| 2* | 60-80% | ausgeschaltet | 0,3 Gew.-% | 1,2 t/h | 320 ppm |
| 3 | 60-80% | eingeschaltet | 0,3 Gew.-% | <0,5 t/h | 310 ppm |

| | | | | | |
|---|---|---|---|---|---|
| *) Vergleichsbeispiel | | | | | |

## Patentansprüche

1. Verfahren zur Herstellung wasserabsorbierender Polymerpartikel durch Polymerisation einer Monomerlösung oder -suspension, enthaltend
a) mindestens ein ethylenisch ungesättigtes, säuregruppentragendes Monomer, das zumindest teilweise neutralisiert sein kann,
b) mindestens einen Vernetzer,
c) mindestens einen Initiator,
d) optional ein oder mehrere mit den unter a) genannten Monomeren copolymerisierbare ethylenisch ungesättigte Monomere und
e) optional ein oder mehrere wasserlösliche Polymere,
in mindestens einem Polymerisationsreaktor, wobei das erhaltene Polymergel dem Polymerisationsreaktor entnommen, gegebenenfalls zerkleinert, als partikuläres Polymergel in mindestens einem Verweilzeitbehälter zwischengelagert, mittels mindestens einer ersten Fördervorrichtung am unteren Ende des Verweilzeitbehälters entnommen und getrocknet wird, **dadurch gekennzeichnet, dass** das zwischengelagerte partikuläre Polymergel im Verweilzeitbehälter mittels mindestens einer zweiten Fördervorrichtung oberhalb der ersten Fördervorrichtung in Richtung der ersten Fördervorrichtung gefördert wird.

2. Verfahren gemäß Anspruch 1, **dadurch gekennzeichnet, dass** die erste Fördervorrichtung ein Schneckenförderer ist.

3. Verfahren gemäß Anspruch 1 oder 2, **dadurch gekennzeichnet, dass** die erste Fördervorrichtung ein Schneckenförderer mit zwei gegenläufigen Förderschnecken ist.

4. Verfahren gemäß einem der Ansprüche 1 bis 3, **dadurch gekennzeichnet, dass** die zweite Fördervorrichtung ein Schneckenförderer ist.

5. Verfahren gemäß einem der Ansprüche 1 bis 4, **dadurch gekennzeichnet, dass** die zweite Fördervorrichtung ein Schneckenförderer mit einer Kombination aus Rechts- und Linksgewinde ist.

6. Verfahren gemäß einem der Ansprüche 1 bis 5, **dadurch gekennzeichnet, dass** die zweite Fördervorrichtung mindestens ein Schneckenförderer mit zwei gegenläufigen Förderschnecken ist.

7. Verfahren gemäß einem der Ansprüche 1 bis 6, **dadurch gekennzeichnet, dass** der vertikale Abstand zwischen der ersten Fördervorrichtung und der zweiten Fördervorrichtung weniger als 0,5 m beträgt.

8. Verfahren gemäß einem der Ansprüche 1 bis 7, **dadurch gekennzeichnet, dass** die Verweilzeit des partikulären Polymergels im Verweilzeitbehälter von 1 bis 60 Minuten beträgt.

9. Verfahren gemäß einem der Ansprüche 1 bis 8, **dadurch gekennzeichnet, dass** die Temperatur des partikulären Polymergels im Verweilzeitbehälter von 60 bis 100°C beträgt.

10. Verfahren gemäß einem der Ansprüche 1 bis 9, **dadurch gekennzeichnet, dass** die Schütthöhe des partikulären Polymergels im Verweilzeitbehälter von 0,5 bis 3 m beträgt.

11. Verfahren gemäß einem der Ansprüche 1 bis 10, **dadurch gekennzeichnet, dass** die Gasatmosphäre im Verweilzeitbehälter einen Sauerstoffpartialdruck von weniger als 50 mbar aufweist.

12. Verfahren gemäß einem der Ansprüche 1 bis 11, **dadurch gekennzeichnet, dass** das partikuläre Polymergel im Verweilzeitbehälter einen Wassergehalt von 30 bis 70 Gew.-% aufweist.

13. Verfahren gemäß einem der Ansprüche 1 bis 12, **dadurch gekennzeichnet, dass** das partikuläre Polymergel mittels eines Bandtrockners getrocknet und mittels eines Schwenkbandes auf das Trocknungsband gefördert wird.

14. Verfahren gemäß einem der Ansprüche 1 bis 13, **dadurch gekennzeichnet, dass** die wasserabsorbierenden Polymerpartikel eine Zentrifugenretentionskapazität von mindestens 15 g/g aufweisen.

15. Behälter zur Lagerung eines partikulären Polymergels mit mindestens einer ersten Fördervorrichtung am unteren Ende des Behälters und mindestens einer zweiten Fördervorrichtung oberhalb der ersten Fördervorrichtung, wobei die mindestens eine zweite Fördervorrichtung in Richtung der ersten Fördervorrichtung fördern kann.

16. Behälter gemäß Anspruch 15, **dadurch gekennzeichnet, dass** die erste Fördervorrichtung ein Schneckenförderer ist.

17. Behälter gemäß einem der Ansprüche 15 bis 16, **dadurch gekennzeichnet, dass** die zweite Fördervorrichtung ein Schneckenförderer ist.

18. Behälter gemäß einem der Ansprüche 15 bis 17, **dadurch gekennzeichnet, dass** die zweite Fördervorrichtung ein Schneckenförderer mit einer Kombination aus Rechts- und Linksgewinde ist.

19. Behälter gemäß einem der Ansprüche 15 bis 18, **dadurch gekennzeichnet, dass** die erste Fördervorrichtung und/oder die zweite Fördervorrichtung mindestens ein Schneckenförderer mit zwei gegenläufigen Förderschnecken ist.

20. Vorrichtung zur Herstellung wasserabsorbierender Polymerpartikel, umfassend mindestens einen Polymerisationsreaktor, mindestens einen Behälter gemäß einem der Ansprüche 15 bis 19 und mindestens eine Trocknungsvorrichtung.

## Claims

1. A process for producing water-absorbing polymer particles by polymerizing a monomer solution or suspension comprising
a) at least one ethylenically unsaturated monomer which bears acid groups and may be at least partly neutralized,
b) at least one crosslinker,
c) at least one initiator,
d) optionally one or more ethylenically unsaturated monomers copolymerizable with the monomers specified under a) and
e) optionally one or more water-soluble polymers
in at least one polymerization reactor, the resulting polymer gel being removed from the polymerization reactor, optionally comminuted, stored intermediately in at least one delay vessel in the form of particulate polymer gel, removed by means of at least one first conveying device at the lower end of the delay vessel and dried, wherein the intermediately stored particulate polymer gel is conveyed within the delay vessel by means of at least one second conveying device above the first conveying device in the direction of the first conveying device.

2. The process according to claim 1, wherein the first conveying device is a screw conveyor.

3. The process according to claim 1 or 2, wherein the first conveying device is a screw conveyor with two contrarotatory conveying screws.

4. The process according to any one of claims 1 to 3, wherein the second conveying device is a screw conveyor.

5. The process according to any one of claims 1 to 4, wherein the second conveying device is a screw conveyor with a combination of right-hand and lefthand thread.

6. The process according to any one of claims 1 to 5, wherein the second conveying device is at least one screw conveyor with two contrarotatory conveying screws.

7. The process according to any one of claims 1 to 6, wherein the vertical distance between the first conveying device and the second conveying device is less than 0.5 m.

8. The process according to any one of claims 1 to 7, wherein the residence time of the particulate polymer gel in the delay vessel is from 1 to 60 minutes.

9. The process according to any one of claims 1 to 8, wherein the temperature of the particulate polymer gel in the delay vessel is from 60 to 100°C.

10. The process according to any one of claims 1 to 9, wherein the bed height of the particulate polymer gel in the delay vessel is from 0.5 to 3 m.

11. The process according to any one of claims 1 to 10, wherein the gas atmosphere in the delay vessel has a partial oxygen pressure of less than 50 mbar.

12. The process according to any one of claims 1 to 11, wherein the particulate polymer gel in the delay vessel has a water content of from 30 to 70% by weight.

13. The process according to any one of claims 1 to 12, wherein the particulate polymer gel is dried by means of a belt dryer and is conveyed on to the drying belt by means of a swivel belt.

14. The process according to any one of claims 1 to 13, wherein the water-absorbing polymer particles have a centrifuge retention capacity of at least 15 g/g.

15. A vessel for storing a particulate polymer gel comprising at least one first conveying device at the lower end of the vessel and at least one second conveying device above the first conveying device, via at least one second conveying device being able to convey in the direction of the first conveying device.

16. The vessel according to claim 15, wherein the first conveying device is a screw conveyor.

17. The vessel according to either of claims 15 and 16, wherein the second conveying device is a screw conveyor.

18. The vessel according to any one of claims 15 to 17, wherein the second conveying device is a screw conveyor with a combination of right-hand and lefthand thread.

19. The vessel according to any one of claims 15 to 18, wherein the first conveying device and/or the second conveying device is at least one screw conveyor with two contrarotatory conveying screws.

20. An apparatus for producing water-absorbing polymer particles comprising at least one polymerization reactor, at least one vessel according to any one of claims 15 to 19 and at least one drying apparatus.

## Revendications

1. Procédé de fabrication de particules polymères absorbant l'eau par polymérisation d'une solution ou suspension de monomères, contenant :
a) au moins un monomère éthyléniquement insaturé, portant des groupes acides, qui peut être au moins partiellement neutralisé,
b) au moins un agent de réticulation,
c) au moins un initiateur,
d) éventuellement un ou plusieurs monomères éthyléniquement insaturés copolymérisables avec les monomères indiqués en a), et
e) éventuellement un ou plusieurs polymères solubles dans l'eau,
dans au moins un réacteur de polymérisation, le gel polymère obtenu étant soutiré du réacteur de polymérisation, éventuellement broyé, entreposé sous la forme d'un gel polymère particulaire dans au moins un contenant à temps de séjour, soutiré au moyen d'au moins un premier dispositif de transport à l'extrémité inférieure du contenant à temps de séjour et séché, **caractérisé en ce que** le gel polymère particulaire entreposé est transporté dans le contenant à temps de séjour au moyen d'au moins un second dispositif de transport au-dessus du premier dispositif de transport dans la direction du premier dispositif de transport.

2. Procédé selon la revendication 1, **caractérisé en ce que** le premier dispositif de transport est un transporteur à vis.

3. Procédé selon la revendication 1 ou 2, **caractérisé en ce que** le premier dispositif de transport est un transporteur à vis comprenant deux vis de transport contrarotatives.

4. Procédé selon l'une quelconque des revendications 1 à 3, **caractérisé en ce que** le second dispositif de transport est un transporteur à vis.

5. Procédé selon l'une quelconque des revendications 1 à 4, **caractérisé en ce que** le second dispositif de transport est un transporteur à vis comprenant une combinaison d'un filetage droit et gauche.

6. Procédé selon l'une quelconque des revendications 1 à 5, **caractérisé en ce que** le second dispositif de transport est au moins un transporteur à vis comprenant deux vis de transport contrarotatives.

7. Procédé selon l'une quelconque des revendications 1 à 6, **caractérisé en ce que** la distance verticale entre le premier dispositif de transport et le second dispositif de transport est inférieure à 0,5 m.

8. Procédé selon l'une quelconque des revendications 1 à 7, **caractérisé en ce que** le temps de séjour du gel polymère particulaire dans le contenant à temps de séjour est de 1 à 60 minutes.

9. Procédé selon l'une quelconque des revendications 1 à 8, **caractérisé en ce que** la température du gel polymère particulaire dans le contenant à temps de séjour est de 60 à 100 °C.

10. Procédé selon l'une quelconque des revendications 1 à 9, **caractérisé en ce que** la hauteur de garnissage du gel polymère particulaire dans le contenant à temps de séjour est de 0,5 à 3 m.

11. Procédé selon l'une quelconque des revendications 1 à 10, **caractérisé en ce que** l'atmosphère gazeuse dans le contenant à temps de séjour présente une pression partielle d'oxygène inférieure à 50 mbar.

12. Procédé selon l'une quelconque des revendications 1 à 11, **caractérisé en ce que** le gel polymère particulaire dans le contenant à temps de séjour présente une teneur en eau de 30 à 70 % en poids.

13. Procédé selon l'une quelconque des revendications 1 à 12, **caractérisé en ce que** le gel polymère particulaire est séché au moyen d'un séchoir à bande et transporté au moyen d'une bande pivotante sur la bande de séchage.

14. Procédé selon l'une quelconque des revendications 1 à 13, **caractérisé en ce que** les particules polymères absorbant l'eau présentent une capacité de rétention centrifuge d'au moins 15 g/g.

15. Contenant pour le stockage d'un gel polymère particulaire comprenant au moins un premier dispositif de transport à l'extrémité inférieure du contenant et au moins un second dispositif de transport au-dessus du premier dispositif de transport, ledit au moins un second dispositif de transport pouvant transporter dans la direction du premier dispositif de transport.

16. Contenant selon la revendication 15, **caractérisé en ce que** le premier dispositif de transport est un transporteur à vis.

17. Contenant selon l'une quelconque des revendications 15 à 16, **caractérisé en ce que** le second dispositif de transport est un transporteur à vis.

18. Contenant selon l'une quelconque des revendications 15 à 17, **caractérisé en ce que** le second dispositif de transport est un transporteur à vis comprenant une combinaison d'un filetage droit et gauche.

19. Contenant selon l'une quelconque des revendications 15 à 18, **caractérisé en ce que** le premier dispositif de transport et/ou le second dispositif de transport sont au moins un dispositif de transport comprenant deux vis de transport contrarotatives.

20. Dispositif pour la fabrication de particules polymères absorbant l'eau, comprenant au moins un réacteur de polymérisation, au moins un contenant selon l'une quelconque des revendications 15 à 19 et au moins un dispositif de séchage.
